# EUROPEAN PATENT SPECIFICATION

(11) **EP 3 626 779 B1**
(45) Date of publication and mention of the grant of the patent: **21.04.2021**
(21) Application number: 18801870.9
(22) Date of filing: 14.03.2018
(51) Int. Cl.: C08L 63/00, C08K 3/04, C08K 5/23, H01B 3/30, H01B 3/40, H02K 3/34, C08F 283/10, C08F 292/00, C08K 5/14, H02K 3/30, H02K 15/12

(54) **LIQUID THERMOSETTING RESIN COMPOSITION, METHOD FOR PRODUCING RESIN CURED PRODUCT, STATOR COIL, AND ROTATING ELECTRICAL MACHINE**
FLÜSSIGE WÄRMEHÄRTENDE HARZZUSAMMENSETZUNG, VERFAHREN ZUR HERSTELLUNG EINES HARZGEHÄRTETEN PRODUKTS, STATORSPULE UND ELEKTRISCHE DREHMASCHINE
COMPOSITION DE RÉSINE THERMODURCISSABLE LIQUIDE, PROCÉDÉ DE PRODUCTION DE PRODUIT DURCI DE RÉSINE, BOBINE DE STATOR ET MACHINE ÉLECTRIQUE ROTATIVE

(30) Priority: 17.05.2017 JP 2017098181
(43) Date of publication of application: 25.03.2020
(73) Proprietor: Mitsubishi Electric Corporation, Chiyoda-ku Tokyo 100-8310 (JP)
(72) Inventor: SATO, Satoru, Tokyo 100-8310 (JP); MABUCHI, Takahiro, Tokyo 100-8310 (JP)
(74) Representative: Sajda, Wolf E.
(86) International application number: PCT/JP2018/009919
(87) International publication number: WO 2018/211799

(56) References cited:
- WO-A1-2008/104078
- WO-A1-2017/061006
- CN-A- 105 255 353
- CN-A- 106 117 400
- JP-A- 2009 507 338
- JP-A- 2010 519 062
- JP-A- 2012 251 018
- JP-A- 2012 251 018
- US-A1- 2014 378 580

## Description

### TECHNICAL FIELD

The present invention relates to a liquid thermosetting resin composition to be used for insulation of an electrical device, and more particularly, to a liquid thermosetting resin composition to be used for coil impregnation of a stator coil and for casting thereof.

### BACKGROUND ART

In recent years, along with downsizing of an electrical device, investigations for increasing heat resistance of a resin material have been actively conducted. As one measure for improving the heat resistance of the resin material, it is effective to add nanocarbon, particularly a fullerene. The fullerene has a high radical-scavenging property, and hence is considered to have a suppressing effect on degradation of a resin.

For example, in Patent Document 1, there is a disclosure of a fullerene-unsaturated compound conjugate formed of a fullerene and an unsaturated compound, such as styrene or methacrylic acid, chemically bonded to the fullerene. In addition, in Patent Document 2, there is a disclosure of a radiation-sensitive resin composition containing: a copolymer having a carboxyl group and/or a carboxylic acid anhydride group, and an epoxy group; a polymerizable compound having an ethylenically unsaturated bond; a radiation-sensitive polymerization initiator; and a fullerene derivative. Patent Document 3 discloses an epoxy-vinyl copolymerization type liquid resin composition containing: an epoxy resin having an epoxy equivalent of not more than 200 g/eq; an acid anhydride having an unsaturated double bond that is liquid at normal temperature, or the acid anhydride and maleic anhydride; a polyfunctional vinyl monomer which is liquid at normal temperature; an epoxy resin curing catalyst which accelerates a curing reaction of the epoxy resin with the acid anhydride or with the acid anhydride and maleic anhydride; and a radical polymerization catalyst which accelerates a curing reaction of the polyfunctional vinyl monomer, wherein the resin composition is capable of forming, through curing, a cured product which is a copolymer of the epoxy resin, the acid anhydride or the acid anhydride and maleic anhydride, and the polyfunctional vinyl monomer. The liquid resin compositions are suitable as a sealing material for electronic apparatuses, an impregnating and anchoring varnish for motor or generator coils, and a casting varnish for molded transformers.

Further, in Non-Patent Document 1, there is a report that addition of a fullerene can suppress thermal degradation of a polymethyl methacrylate (PMMA) film.

### LIST OF CITATIONS

### PATENT DOCUMENTS

Patent Document 1: JP 8-239209 A
Patent Document 2: JP 2004-264384 A
Patent Document 3: US2014/0378580 A1

### NON-PATENT DOCUMENT

Non-Patent Document 1: B. B. Troitskii, et al., "RETARDATION OF THERMAL DEGRADATION OF PMMA AND PVC BY C60", Eur. Polym. J. Vol. 33, No. 10-12, pp. 1587-1590, 1997

### SUMMARY OF INVENTION

### TECHNICAL PROBLEM

In recent years, an electrical device has been required to be not only downsized, but also increased in output. In order to achieve those requirements, an insulating material is required to be increased in heat resistance and increased in strength. However, although the configurations of Patent Document 1 and Non-Patent Document 1 can each improve the heat resistance, the configurations cannot achieve the increase in strength because of insufficient adhesiveness at an interface between the resin and the fullerene. Meanwhile, in Patent Document 2, the strength can also be increased by virtue of the use of the fullerene derivative, but a plurality of steps are required in order to synthesize the fullerene derivative. Accordingly, there is a demand that the production of a resin cured product be streamlined by reducing the steps.

The present invention has been made in order to solve the problem as described above, and an object of the present invention is to provide a liquid thermosetting resin composition that enables efficient production of a resin cured product having high heat resistance and high strength.

### SOLUTION TO PROBLEM

According to one embodiment of the present invention, there is provided a liquid thermosetting resin composition as disclosed in present claim 1.

### ADVANTAGEOUS EFFECTS OF INVENTION

According to the present invention, the liquid thermosetting resin composition that enables efficient production of a resin cured product having high heat resistance and high strength can be provided.

### BRIEF DESCRIPTION OF DRAWINGS

- FIG. 1: is a schematic view for illustrating the state of components of a liquid thermosetting resin composition according to a first embodiment of the present invention.
- FIG. 2: is a perspective cross-sectional view of a stator coil according to a second embodiment of the present invention.
- FIG. 3: is a view for schematically illustrating a relevant part of a stator for a rotating electrical machine according to a third embodiment of the present invention, and is a view for illustrating a cross-section along a rotation axis (lateral cross-sectional view).
- FIG. 4: is a view for schematically illustrating the relevant part of the stator for a rotating electrical machine according to the third embodiment, and is a view of a cross-section orthogonal to the rotation axis as seen from a direction indicated by the arrows A of FIG. 3 (longitudinal cross-sectional view).
- FIG. 5: is a flowchart for producing a resin cured product from a liquid thermosetting resin composition of the Examples.
- FIG. 6: is a graph for showing a relationship between the addition amount of nanocarbon and a 10 mass% reduction temperature.

### DESCRIPTION OF EMBODIMENTS

### First Embodiment

A liquid thermosetting resin composition according to a first embodiment of the present invention includes: a thermosetting resin; a nanocarbon; an organic additive having functional groups reactive with the thermosetting resin and the nanocarbon at molecular ends thereof, wherein the organic additive has an -N=N- structure in a molecule thereof and undergoes thermal degradation at 50 °C or more and 100 °C or less to generate a nitrogen gas and carbon radicals, to thereby cause a radical reaction with the nanocarbon; a polymerizable unsaturated monomer; and a polymerization initiator for the polymerizable unsaturated monomer.

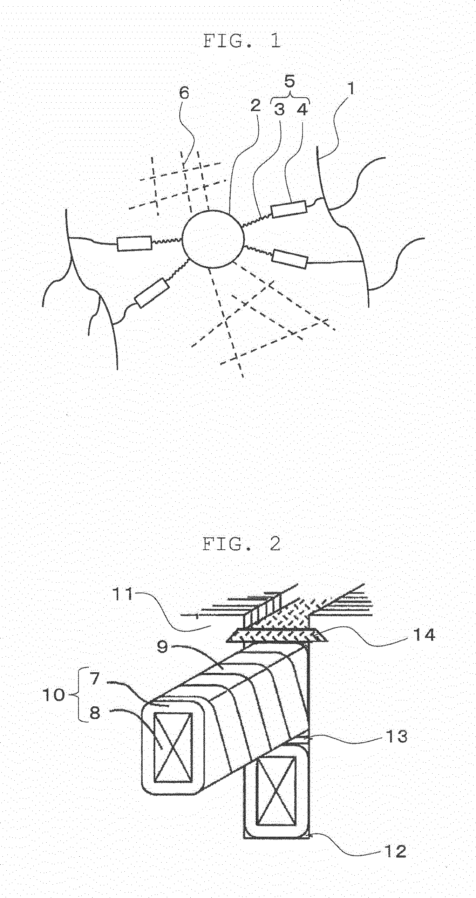

FIG. 1 is a schematic view for illustrating the state of components of the liquid thermosetting resin composition of the present invention. A thermosetting resin 1 forms a network structure via nanocarbon 2 and an organic additive 5. The organic additive 5 has a reaction site 3 for the nanocarbon and a reaction site 4 for the thermosetting resin 1. In addition, the polymerizable unsaturated monomer reacts with the nanocarbon and self-polymerizes to become a polymer 6, which forms a network structure.

The thermosetting resin 1 is not particularly limited as long as the thermosetting resin 1 is used for varnish impregnation or casting. Specific examples thereof include an epoxy resin, a phenol resin, a melamine resin, an unsaturated polyester resin, and a polyamide resin, and mixtures thereof. Of those, an epoxy resin is preferably used. The epoxy resin is formed of an epoxy compound having two or more epoxy groups per molecule.

Examples of the epoxy resin include: glycidyl ether-type epoxy resins, such as a bisphenol A-type epoxy resin, a brominated bisphenol A-type epoxy resin, a hydrogenated bisphenol A-type epoxy resin, a bisphenol F-type epoxy resin, a bisphenol S-type epoxy resin, a bisphenol AF-type epoxy resin, a biphenyl-type epoxy resin, a naphthalene-type epoxy resin, a fluorene-type epoxy resin, a novolac-type epoxy resin, a phenol-novolac-type epoxy resin, an o-cresol-novolac-type epoxy resin, a tris(hydroxyphenyl)methane-type epoxy resin, and a tetraphenylolethane-type epoxy resin; glycidyl ester-type epoxy resins each obtained by condensation of epichlorohydrin and a carboxylic acid; and heterocyclic epoxy resins, such as triglycidyl isocyanate, and a hydantoin-type epoxy resin obtained by a reaction between epichlorohydrin and a hydantoin. Those epoxy resins may be used alone or as a mixture thereof.

The content of the thermosetting resin 1 is preferably 30 parts by mass or more and 80 parts by mass or less with respect to 100 parts by mass of the total blending amount of resins. When the content of the thermosetting resin 1 falls outside the above-mentioned range, the strength of the resins is weak, possibly resulting in a problem with moldability.

When an epoxy resin is used as the thermosetting resin 1, a curing agent and a curing accelerator for the epoxy resin may be used in combination therewith as required. The curing agent for the epoxy resin chemically reacts with the epoxy resin to cure the epoxy resin. As such curing agent, any curing agent that cures the epoxy resin may be appropriately used, and the kind thereof is not particularly limited. Examples of the curing agent include: amine-based curing agents, such as ethylenediamine and polyamidoamine; and acid anhydride-based curing agents, such as phthalic anhydride, hexahydrophthalic anhydride, 4-methylhexahydrophthalic anhydride, tetrahydrophthalic anhydride, 4-methyltetrahydrophthalic anhydride, and tetrabromophthalic anhydride.

In addition, the curing accelerator for the epoxy resin increases the curing rate of the epoxy resin. As such curing accelerator, any curing accelerator that accelerates the curing of the epoxy resin may be appropriately used, and the kind thereof is not particularly limited.

The nanocarbon 2 refers to a nanosized carbon material. The term "nanosize" refers to a size of 1,000 nm or less, and encompasses a size of less than 1 nm as well. The nanocarbon 2 only needs to be such that the smallest dimension out of its own dimensions is a nanosize. For example, when the nanocarbon 2 has a sheet shape, its thickness only needs to be a nanosize.

When the nanocarbon 2 has a fibrous shape, its diameter only needs to be a nanosize. When the nanocarbon 2 has a particle shape, its particle diameter only needs to be a nanosize. The nanocarbon 2 is not particularly limited as long as the nanocarbon 2 is a nanosized carbon material, that is, a compound formed of carbon atoms, and specific examples thereof include a fullerene, carbon nanotubes, carbon black, and a mixture thereof.

The dimensions of the nanocarbon 2 may be determined by dispersing the nanocarbon 2 in a solvent that does not dissolve the nanocarbon 2 (e.g., water or an alcohol), and then subjecting the dispersion to measurement by a dynamic light scattering method, or dropping the dispersion onto a substrate, volatilizing the solvent, and then observing the residue with an atomic force microscope or a scanning electron microscope.

Examples of such nanocarbon include those described in Chemical Industry, Vol. 56, P50-62 (2005). Any such nanocarbon has a high radical-scavenging property, and has an action of scavenging a radical to be generated through the cleavage of a molecular bond at the time of initiation of degradation of a resin under high temperature.

Accordingly, it is known that, when the nanocarbon is added to a resin, an improving effect on the heat resistance of the resin is exhibited. Of those nanocarbons, at least one selected from the group consisting of a fullerene and carbon nanotubes is preferably used, and a fullerene is more preferably used. The fullerene is soluble in an organic solvent, and hence has good dispersibility and is excellent in workability, as compared to other nanocarbons.

Examples of the fullerene may include C36, C60, C70, C76, C78, C82, C84, C90, C96, and a higher fullerene having more than 96 carbon atoms per molecule and having a maximum aggregate diameter of 30 nm or less. Of those, C60, C70, C76, and C82 are preferably used. The term "fullerene derivative" means compounds each having a fullerene skeleton in general. The term "fullerene skeleton" is a collective term for skeletons each formed of a spherical shell-shaped carbon molecule.

Examples of the fullerene skeleton include C36, C60, C70, C76, C78, C82, C84, C90, C96, and a higher fullerene having more than 96 carbon atoms per molecule and having a maximum aggregate diameter of 30 nm or less. Those fullerenes may each be synthesized by a known method. For example, a production method for C36 is disclosed in New Diamond. vol. 16, No 2, 2000, p. 30-31.

As a production method for C60, C70, C76, C78, C82, C84, C90, and C96, a production method based on an arc discharge method is disclosed in J. Phys. Chem., 94, 8634 (1990). In addition, the higher fullerene having more than 96 carbon atoms per molecule and having a maximum aggregate diameter of 30 nm or less may be obtained as a by-product of the arc discharge method.

In addition, a fullerene derivative having the following functional group on the surface of a fullerene may be used: an alkyl group having 1 to 6 carbon atoms, an alkenyl group having 2 to 6 carbon atoms, an alkynyl group having 2 to 6 carbon atoms, a carboxyl group, a hydroxyl group, an epoxy group, an amino group, or the like.

The amino group is represented by the formula -NR₂. In the formula, Rs may each independently represent a hydrogen atom, an alkyl group having 1 to 6 carbon atoms, an alkenyl group having 2 to 6 carbon atoms, an alkynyl group having 2 to 6 carbon atoms, or a polyether chain having a molecular weight of from 30 to 50,000. In the amino group, when the substituents R are each the polyether chain, an end thereof may be a hydroxy group or an alkoxyl group having 1 to 6 carbon atoms. Of the fullerene derivatives, phenyl-fullerene-butyric acid methyl ester is particularly preferred because of its excellent solubility in a solvent.

The carbon nanotubes are a kind of carbon nanofibers. The carbon nanotubes are each such that a six-membered ring network made of carbon (graphene sheet) is formed into the shape of a coaxial tube of a single layer or a plurality of layers. Carbon nanotubes each formed of a single layer are called single-walled nanotubes (SWNTs), and carbon nanotubes each formed of a plurality of layers are called multiwalled nanotubes (MWNTs). In particular, carbon nanotubes each formed of two layers are also called double-walled nanotubes (DWNTs).

Those carbon nanotubes may be synthesized by a known method. For example, an arc discharge method is a method involving performing arc discharge between electrode materials made of carbon rods under an atmosphere of argon or hydrogen having a pressure slightly lower than atmospheric pressure, to thereby provide multiwalled carbon nanotubes deposited on a cathode. The carbon nanotubes to be used preferably have an average diameter of 100 nm or less and an average length of 20 µm or less. Carbon nanotubes having an average diameter of more than 100 nm or an average length of more than 20 µm aggregate in the resin, resulting in a decrease in heat resistance of a resin cured product in some cases.

The nanocarbon 2 does not have sufficient dispersibility in a resin and an organic solvent, and hence aggregates when added in a large amount. Therefore, in order to improve heat resistance and strength, the content of the nanocarbon 2 is required to be 0.1 mass% or more and 10 mass% or less with respect to the liquid thermosetting resin composition. When the content of the nanocarbon 2 is less than 0.1 mass%, a heat resistance-improving effect is not obtained. On the other hand, when the content of the nanocarbon 2 is more than 10 mass%, aggregation and sedimentation of the nanocarbon 2 occur, and hence it is difficult to obtain a homogeneous resin cured product.

The organic additive 5 having functional groups reactive with the thermosetting resin 1 and the nanocarbon 2 at molecular ends thereof is an azo compound. The azo compound has a structure R¹-N=N-R², in which two organic functional groups R¹ and R² are linked via an azo group -N=N-. R¹ and R² each represent a linear or branched hydrocarbon group having 2 to 30 carbon atoms, and the hydrocarbon group may contain an oxygen atom, a sulfur atom, or a nitrogen-containing group.

Examples of the functional group reactive with the thermosetting resin 1 include a carboxylic acid group, a hydroxy group, an amino group, an isocyanate group, and an ether group. The functional group reactive with the thermosetting resin 1 is included in the organic functional groups R¹ and R². The organic additive 5 may contain one kind of those functional groups, or may contain two or more kinds thereof. Of those, an organic additive 5 containing at least one selected from the group consisting of a carboxylic acid group, a hydroxy group, and an amino group is preferably used.

In addition, when the compatibility of the organic additive 5 is low, the organic additive 5 may be blended after being dissolved in a small amount of methanol, ethanol, ether, N,N-dimethylformamide, dimethyl sulfoxide, or the like. The organic additive 5 undergoes thermal degradation at a temperature of 50 °C or more and 100 °C or less to generate a nitrogen gas and radicals represented by ·R¹ and ·R².

Those radicals react with the nanocarbon 2 by virtue of the high radical-scavenging property of the nanocarbon 2. For example, when fullerene C60 is used as the nanocarbon 2, the organic additive 5 undergoes thermal degradation to cause a reaction, to thereby form nanocarbon derivatives having structures represented by (R¹)-C60-(R¹), (R¹)-C60-(R²), and (R²)-C60-(R²).

The organic additive 5 is one that undergoes thermal degradation at a temperature of 50 °C or more and 100 °C or less to react with the nanocarbon 2 to form the nanocarbon derivatives, more preferably one that undergoes thermal degradation at a temperature of 80 °C or more and 100 °C or less to react with the nanocarbon 2 to form the nanocarbon derivatives. When an organic additive 5 that reacts with the nanocarbon 2 at a temperature of less than 50 °C is used, there is a risk of the reaction proceeding even under a room temperature condition, and hence the curing of the resin cannot be controlled, leading to a decrease in heat resistance in some cases.

When an organic additive 5 that reacts with the nanocarbon 2 at a temperature of more than 100 °C is used, the organic additive 5 reacts with the polymerizable unsaturated monomer contained in the liquid thermosetting resin composition, resulting in a decrease in heat resistance of the resin cured product in some cases.

The content of the organic additive 5 is preferably 10 mass% or more and 50 mass% or less with respect to the nanocarbon 2. When the content of the organic additive 5 falls within the above-mentioned range, a resin cured product having high heat resistance and high strength can be efficiently obtained.

Examples of the polymerizable unsaturated monomer include a styrene derivative and a (meth)acrylate derivative. Examples of the styrene derivative include styrene, 1-methyl-2-vinylbenzene, 1-ethyl-2-vinylbenzene, 1-propyl-2-vinylbenzene, 1-methyl-3-vinylbenzene, 1-ethyl-3-vinylbenzene, 1-propyl-3-vinylbenzene, 1-ethyl-4-vinylbenzene, 1-propyl-4-vinylbenzene, 1,2-methyl-4-vinylbenzene, 1,3-methyl-4-vinylbenzene, 1,4-methyl-4-vinylbenzene, 1,2-ethyl-4-vinylbenzene, 1,3-ethyl-4-vinylbenzene, 1,4-ethyl-4-vinylbenzene, 1,2-methyl-5-vinylbenzene, 1,3-methyl-5-vinylbenzene, 1,4-methyl-5-vinylbenzene, 1,2-ethyl-5-vinylbenzene, 1,3-ethyl-5-vinylbenzene, 1,4-ethyl-5-vinylbenzene, 1,2-methyl-6-vinylbenzene, 1,3-methyl-6-vinylbenzene, 1,4-methyl-6-vinylbenzene, 1,2-ethyl-6-vinylbenzene, 1,3-ethyl-6-vinylbenzene, 1,4-ethyl-6-vinylbenzene, o-t-butylstyrene, m-t-butylstyrene, and p-t-butylstyrene. Examples of the (meth)acrylate derivative include 2-hydroxyethyl (meth)acrylate, carbitol (meth)acrylate, isobornyl (meth)acrylate, 3-methoxybutyl (meth)acrylate, 2-(meth)acryloyloxyethyl-2-hydroxypropyl phthalate, ethylene glycol (meth)acrylate, 1,6-hexanediol di(meth)acrylate, 1,9-nonanediol di(meth)acrylate, polypropylene glycol di(meth)acrylate, tetraethylene glycol di(meth)acrylate, bisphenoxyethanolfluorene diacrylate, trimethylolpropane tri(meth)acrylate, pentaerythritol tri(meth)acrylate, tri((meth)acryloyloxyethyl) phosphate, pentaerythritol tetra(meth)acrylate, dipentaerythritol penta(meth)acrylate, and dipentaerythritol hexa(meth)acrylate.

Those polymerizable unsaturated monomers may be used alone or as a mixture thereof. Of those polymerizable unsaturated monomers, at least one selected from the group consisting of styrene and 2-hydroxyethyl (meth)acrylate is preferably used. In addition, the polymerizable unsaturated monomer preferably has a viscosity of 50 mPa·s or less at room temperature (25 °C).

When a polymerizable unsaturated monomer having a viscosity of more than 50 mPa·s at room temperature is used, a temperature at which a viscosity allowing impregnation is achieved is increased. As a result, a period of time until the resin starts to cure (pot life) is shortened to decrease workability.

The content of the polymerizable unsaturated monomer is preferably 10 parts by mass or more and 70 parts by mass or less with respect to 100 parts by mass of the total blending amount of resins. When the content of the polymerizable unsaturated monomer falls within the above-mentioned range, a liquid thermosetting resin composition having a higher impregnating property can be provided.

The polymerization initiator for the polymerizable unsaturated monomer preferably has a 10-hour half-life temperature of 100 °C or more, and examples thereof include dicumyl peroxide, 2,5-dimethyl-2,5(dibenzoylperoxy)hexane, di-t-butyl peroxide, 2,5-dimethyl-2,5-di(t-butylperoxy)hexyne-3, di-t-amyl peroxide, 2,2-di(t-butylperoxy)butane, n-butyl-4,4-di(t-butylperoxy)valerate, ethyl 3,3-di(t-butylperoxy)butyrate, 1,1,3,3-tetramethylbutyl hydroperoxide, t-butyl hydroperoxide, and t-amyl hydroperoxide. The upper limit of the 10-hour half-life temperature of the polymerization initiator for the polymerizable unsaturated monomer is not particularly limited, but is generally 170 °C or less.

From the viewpoint of extending the pot life, the content of the polymerization initiator for the polymerizable unsaturated monomer is preferably 0.001 part by mass or more and 5.0 parts by mass or less with respect to 100 parts by mass of the total blending amount of resins. When the content of the polymerization initiator for the polymerizable unsaturated monomer is less than 0.001 part by mass, a polymerization-initiating effect is not sufficiently obtained.

On the other hand, when the content of the polymerization initiator for the polymerizable unsaturated monomer is more than 5.0 parts by mass, a problem occurs, in some cases, in that the polymerization reaction abruptly proceeds (runaway) or the pot life is shortened.

A diluting solvent may be added to the liquid thermosetting resin composition of the present invention in order to improve workability. Examples of such diluting solvent include alcohols, aliphatic carboxylic acid esters, aromatic carboxylic acid esters, ketones, ethers, ether esters, aliphatic hydrocarbons, and aromatic hydrocarbons.

The liquid thermosetting resin composition of the present invention may be prepared by mixing the above-mentioned components with each other. The thus obtained liquid thermosetting resin composition may be used as a resin composition for impregnating a stator coil to be incorporated into a stator for a high-pressure rotary machine, such as an induction motor or a turbine generator, and as a resin composition for impregnating an insulating base material, such as a glass cloth for a laminate or an organic nonwoven fabric, and in particular, is suitably used as a resin composition for impregnation of a stator coil for a high-pressure rotary machine.

A cured product of the liquid thermosetting resin composition of the present invention may be produced through the steps of: heating the above-mentioned liquid thermosetting resin composition, to thereby allow the nanocarbon and the organic additive to react with each other to synthesize a nanocarbon derivative; and further heating the resin composition containing the nanocarbon derivative, to thereby allow the thermosetting resin and the nanocarbon derivative to react with each other and allow the nanocarbon derivative and the polymerizable unsaturated monomer to react with each other.

When the nanocarbon derivative is formed by allowing the nanocarbon to react with the organic additive, adhesiveness at an interface between the nanocarbon and the thermosetting resin is improved, and hence the cured product is not only improved in heat resistance, but also improved in strength. In addition, the nanocarbon derivative is formed at a temperature lower than the reaction temperature of the thermosetting resin and then curing is performed, and hence the cured product can be produced in one step (not requiring a plurality of steps for synthesizing the nanocarbon derivative).

In the step of forming the nanocarbon derivative, it is appropriate that the liquid thermosetting resin composition be heated at a temperature lower than the reaction temperature of the thermosetting resin, preferably 50 °C or more and 100 °C or less, for 3 hours or more and 5 hours or less. In the subsequent step, it is appropriate that the resin composition containing the formed nanocarbon derivative be heated preferably at 110 °C or more and 160 °C or less for 2 hours or more and 8 hours or less, and further, at 170 °C or more and 250 °C or less for 1 hour or more and 3 hours or less. Through such steps, a resin cured product having high heat resistance and high strength can be efficiently provided.

### Second Embodiment

A stator coil according to a second embodiment of the present invention includes: a coil conductor; and an insulating layer arranged on a periphery of the coil conductor, wherein the insulating layer contains a cured product of the above-mentioned liquid thermosetting resin composition. As the coil conductor, one obtained by laminating electric wires each having an insulating coating film or rectangular metal element wires each coated with an insulating material, such as a glass tape, may be used.

As illustrated in FIG. 2, two stator coils each including a coil conductor 10 and an insulating layer 9 are accommodated above and below each other in each of a plurality of slots 12 formed on an inner peripheral side of a stator core 11, a spacer 13 is inserted between these stator coils, and a wedge 14 for fixing the stator coils is inserted at an open end of each of the slots 12.

A stator coil having such structure is produced as described below.

First, an insulating tape is wound around an outer periphery of a coil conductor 10, which is formed by bundling a plurality of element wires 8 each having an insulating coating 7, a plurality of times so as to overlap part (e.g., a portion half the width of the insulating tape) of itself. The element wires forming the coil conductor 10 are not particularly limited as long as the element wires are electrically conductive, and element wires each formed of copper, aluminum, silver, or the like may be used.

Next, the insulating tape wound around the coil conductor 10 is impregnated with a liquid thermosetting resin composition. In this case, as the liquid thermosetting resin composition to be used for the impregnation, the one described in the first embodiment may be used.

An impregnation method is not particularly limited, and a method known in the art may be used. Examples of the impregnation method include vacuum impregnation, vacuum pressure impregnation, and impregnation at normal pressure. Conditions for the impregnation are not particularly limited, and only need to be appropriately adjusted in accordance with the kind of the liquid thermosetting resin composition to be used. When electric wires each having an insulating coating film are used instead of the rectangular metal element wires, the insulating tape may be omitted.

The stator coil according to this embodiment can downsize a device, increase the output thereof, and improve the reliability thereof because the resin cured product contained in its insulating layer is excellent in heat resistance and strength.

### Third Embodiment

An embodiment in which the stator coil described in the second embodiment is applied to a stator for a rotating electrical machine, such as a turbine generator, is described.

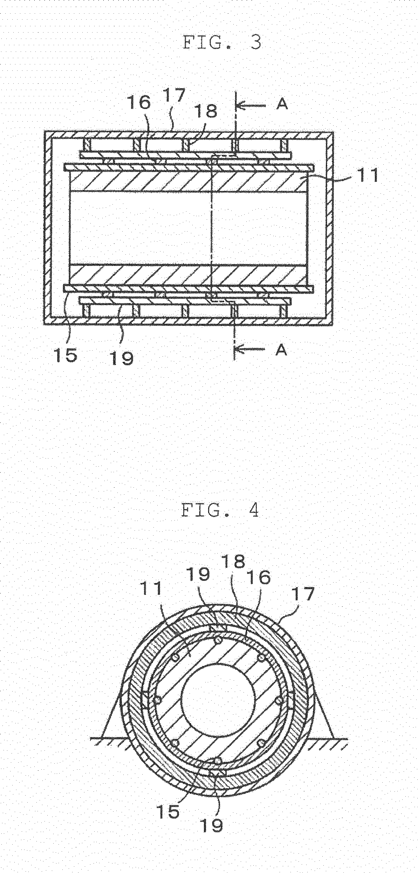

FIG. 3 and FIG. 4 are views for schematically illustrating a relevant part of the stator for a rotating electrical machine, FIG. 3 being a view for illustrating a cross-section along a rotation axis (lateral cross-sectional view), FIG. 4 being a view of a cross-section orthogonal to the rotation axis as seen from a direction indicated by the arrows A of FIG. 3 (longitudinal cross-sectional view).

In FIG. 3 and FIG. 4, the stator for a rotating electrical machine includes: the stator core 11 having a cylindrical shape configured to accommodate a rotator; a plurality (eight in this example) of core fastening members 15 arranged on an outer periphery of the stator core 11 at predetermined intervals in its circumferential direction and configured to fasten the stator core 11 in its axial direction; a plurality (four in this example) of axially flat holding rings 16 arranged on the outer periphery of the stator core 11 at predetermined intervals in its axial direction and configured to hold the stator core 11 in such a manner as to fasten the stator core 11 toward a central portion thereof from above the core fastening members 15; a cylindrical frame 17 surrounding a circumference of the stator core 11 at a distance; a plurality (five in this example) of ring-shaped inner frame members 18 protrudingly provided toward an axial center on the inner surface of the frame 17 at predetermined intervals in the axial direction; a plurality (four in this example) of elastic supporting members 19 each fixed to the inner frame members 18 that are adjacent to each other, and each formed of a spring plate fixed to the holding rings 16 at an axial-direction central portion thereof; and the like.

The stator illustrated in FIG. 3 and FIG. 4 is to be used as a component of, for example, an armature for a turbine generator. A predetermined number of slots formed in the axial direction are arranged on an inner periphery of the stator core 11 in the circumferential direction, and a stator coil is arranged in each of the slots.

A rotating electrical machine, such as a turbine generator, has been required to be further increased in output and downsized. In order to achieve the increase in output and the downsizing, it is essential to improve the insulating performance of a coil insulated product. The application of the resin according to the present invention to a stator coil for the rotating electrical machine can be expected to provide an effect of achieving the further increase in output and downsizing. In addition, such coil is generally used in combination with a resin, an insulating tape, and the like, and can provide a product excellent in coil insulation characteristic and ease of production.

The liquid thermosetting resin composition described in the first embodiment can be applied not only to the stator coil described in the second embodiment and the armature for a turbine generator described in the third embodiment, but also to an application in which a coil in any of various motors or a rotating electrical machine, such as a generator, is insulated.

When the coil in the rotating electrical machine is insulated using the liquid thermosetting resin composition described in the first embodiment, a gap between coils and a gap between the rotary machine and each of the coils are each filled with a resin cured product having high heat resistance and high strength. As a result, insulating performance can be improved, and besides, dielectric breakdown and the deformation of the coils can be prevented.

### EXAMPLES

The liquid thermosetting resin composition of the present invention is specifically described below by way of Examples and Comparative Examples.

### Example 1

28 parts by mass of a bisphenol A-type epoxy resin (product name: "JER828", manufactured by Mitsubishi Chemical Corporation) serving as a thermosetting resin, 22 parts by mass of an alicyclic acid anhydride (product name: "HN-2200", manufactured by Hitachi Chemical Company, Ltd.) serving as an epoxy resin curing agent, 0.1 part by mass of zinc octylate serving as an epoxy resin curing accelerator, 0.1 part by mass of fullerene C60 (product name: "nanom purple", manufactured by Frontier Carbon Corporation) serving as nanocarbon, 0.03 part by mass of 4,4'-azobis(4-cyanovaleric acid) (manufactured by Tokyo Chemical Industry Co., Ltd.) serving as an organic additive having functional groups reactive with the thermosetting resin and the nanocarbon at molecular ends thereof, 49.7 parts by mass of styrene (viscosity at 25 °C: 0.8 mPa·s, manufactured by Wako Pure Chemical Industries, Ltd.) serving as a polymerizable unsaturated monomer, and 0.1 part by mass of a peroxide (product name: "Luperox (trademark) DCP, ARKEMA Yoshitomi, Ltd., 10-hour half-life temperature: 117 °C) serving as a polymerization initiator for the polymerizable unsaturated monomer were mixed with each other to prepare a liquid thermosetting resin composition.

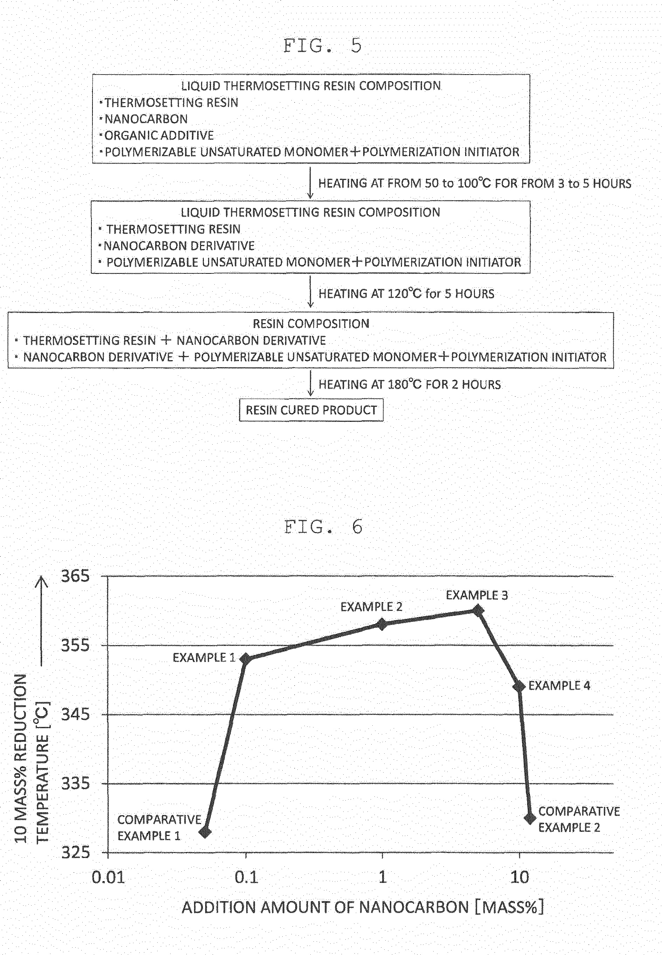

A resin cured product was produced in accordance with a flowchart illustrated in FIG. 5. First, the liquid thermosetting resin composition was heated to 80 °C and kept at 80 °C for 3 hours to provide a liquid thermosetting resin composition having dissolved therein a fullerene derivative. The liquid thermosetting resin composition before the heating was purple, but the heating changed the color to orange, indicating that derivatization of the fullerene had proceeded. After that, the liquid thermosetting resin composition was heated to 120 °C and kept at 120 °C for 5 hours to allow the epoxy resin and the fullerene derivative to react with each other.

In addition, the polymerization initiator caused the polymerizable unsaturated monomer to generate active species, to thereby cause self-polymerization and a reaction with the fullerene derivative. In this heating step, the resin composition did not completely cure, and was partially liquid. The product was washed with acetone and toluene, and subjected to gas chromatography-mass spectrometry (GC-MS) of insoluble components. As a result, in the insoluble components, there was observed a polymer component obtained by polymerizing the epoxy resin, the fullerene component, and styrene.

When unreacted, the epoxy resin, the fullerene component, and styrene are soluble in acetone or toluene. The result confirmed that a reaction between the epoxy resin and the fullerene derivative, and a reaction between the fullerene derivative and styrene had proceeded. Further, the resin composition was heated to 180 °C and kept at 180 °C for 2 hours to provide a resin cured product.

### Example 2

A resin cured product was obtained in the same manner as in Example 1 except that: the addition amount of fullerene C60 was changed to 1 part by mass; the addition amount of 4,4'-azobis(4-cyanovaleric acid) was changed to 0.3 part by mass; and the addition amount of styrene was changed to 48.5 parts by mass.

### Example 3

A resin cured product was obtained in the same manner as in Example 1 except that: the addition amount of fullerene C60 was changed to 5 parts by mass; the addition amount of 4,4'-azobis(4-cyanovaleric acid) was changed to 1.5 parts by mass; and the addition amount of styrene was changed to 43.3 parts by mass.

### Example 4

A resin cured product was obtained in the same manner as in Example 1 except that: the addition amount of fullerene C60 was changed to 10 parts by mass; the addition amount of 4,4'-azobis(4-cyanovaleric acid) was changed to 3.0 parts by mass; and the addition amount of styrene was changed to 36.8 parts by mass.

### Example 5

A resin cured product was obtained in the same manner as in Example 1 except that: the addition amount of fullerene C60 was changed to 1 part by mass; the addition amount of 4,4'-azobis(4-cyanovaleric acid) was changed to 0.3 part by mass; the addition amount of styrene was changed to 48.5 parts by mass; and the keeping at 80 °C for 3 hours in the curing conditions was changed to keeping at 60 °C for 5 hours.

### Example 6

A resin cured product was obtained in the same manner as in Example 1 except that: the addition amount of fullerene C60 was changed to 1 part by mass; the addition amount of 4,4'-azobis(4-cyanovaleric acid) was changed to 0.3 part by mass; the addition amount of styrene was changed to 48.5 parts by mass; and the keeping at 80 °C for 3 hours in the curing conditions was changed to keeping at 100 °C for 3 hours.

### Example 7

A resin cured product was obtained in the same manner as in Example 1 except that: the addition amount of fullerene C60 was changed to 1 part by mass; 0.3 part by mass of 2,2'-azobis[2-methyl-N-(2-hydroxyethyl)propionamide] was used instead of 0.03 part by mass of 4,4'-azobis(4-cyanovaleric acid); the addition amount of styrene was changed to 48.5 parts by mass; and the keeping at 80 °C for 3 hours in the curing conditions was changed to keeping at 90 °C for 3 hours.

### Example 8

A resin cured product was obtained in the same manner as in Example 1 except that: the addition amount of fullerene C60 was changed to 1 part by mass; 0.3 part by mass of 2,2'-azobis(2-methylpropionamidine) dihydrochloride was used instead of 0.03 part by mass of 4,4'-azobis(4-cyanovaleric acid); and the addition amount of styrene was changed to 48.5 parts by mass.

### Example 9

A resin cured product was obtained in the same manner as in Example 1 except that: the addition amount of fullerene C60 was changed to 1 part by mass; the addition amount of 4,4'-azobis(4-cyanovaleric acid) was changed to 0.3 part by mass; and 48.5 parts by mass of 2-hydroxyethyl methacrylate (viscosity at 25 °C: 6 mPa·s) was used instead of 49.7 parts by mass of styrene.

### Example 10

A resin cured product was obtained in the same manner as in Example 1 except that: 1 part by mass of carbon nanotubes (multiwalled carbon nanotubes, average diameter: 10 nm to 20 nm, average length: 5 µm to 20 µm, manufactured by Tokyo Chemical Industry Co., Ltd.) were used instead of 0.1 part by mass of fullerene C60; the addition amount of 4,4'-azobis(4-cyanovaleric acid) was changed to 0.3 part by mass; and the addition amount of styrene was changed to 48.5 parts by mass.

### Example 11

A resin cured product was obtained in the same manner as in Example 1 except that the keeping at 80 °C for 3 hours in the curing conditions was changed to keeping at 50 °C for 5 hours.

### Example 12

A resin cured product was obtained in the same manner as in Example 1 except that: 1 part by mass of a fullerene derivative (phenyl-fullerene-butyric acid methyl ester, manufactured by Sigma-Aldrich Corporation) was used instead of 0.1 part by mass of fullerene C60; the addition amount of 4,4'-azobis(4-cyanovaleric acid) was changed to 0.3 part by mass; and the addition amount of styrene was changed to 48.5 parts by mass.

### Comparative Example 1

A resin cured product was obtained in the same manner as in Example 1 except that: the addition amount of fullerene C60 was changed to 0.01 part by mass; the addition amount of 4,4'-azobis(4-cyanovaleric acid) was changed to 0.003 part by mass; and the addition amount of styrene was changed to 49.8 parts by mass.

### Comparative Example 2

A resin cured product was obtained in the same manner as in Example 1 except that: the addition amount of fullerene C60 was changed to 12 parts by mass; the addition amount of 4,4'-azobis(4-cyanovaleric acid) was changed to 3.6 part by mass; and the addition amount of styrene was changed to 34.2 parts by mass.

### Comparative Example 3

A resin cured product was obtained in the same manner as in Example 1 except that: fullerene C60 and 4,4'-azobis(4-cyanovaleric acid) were not added; and the addition amount of styrene was changed to 49.8 parts by mass.

### Comparative Example 4

A resin cured product was obtained in the same manner as in Example 1 except that: the addition amount of fullerene C60 was changed to 1 part by mass; and 4,4'-azobis(4-cyanovaleric acid) was not added; and the addition amount of styrene was changed to 48.8 parts by mass.

The resin cured products obtained in Examples 1 to 12 and Comparative Examples 1 to 4 were each evaluated for its heat resistance and strength in accordance with the following methods.

### Evaluation of Heat Resistance

About 5 mg of a resin cured product was prepared, and was put into a thermogravimetric apparatus (TG-DTA6300, manufactured by Hitachi High-Tech Science Corporation) and increased in temperature to 900 °C at 5 °C/min under an air atmosphere to determine its 10 mass% reduction temperature. It can be said that a higher 10 mass% reduction temperature indicates more excellent heat resistance.

As compared to the 10 mass% reduction temperature of the resin cured product of Comparative Example 3, a case in which the heat-resistant temperature was increased by 15 °C or more was marked with Symbol " ⊚ ", a case in which the heat-resistant temperature was increased by 10 °C or more and less than 15 °C was marked with Symbol "○", and a case in which the heat-resistant temperature was comparable was marked with Symbol "Δ".

The results of the heat resistance evaluation are shown in Tables 1 to 3. Further, for Examples 1 to 4 and Comparative Examples 1 and 2, in which only the addition amount of the nanocarbon was changed, a relationship between the addition amount of the nanocarbon and the 10 mass% reduction temperature is shown in FIG. 6.

### Evaluation of Strength

A resin cured product was cut to dimensions of 70 mm×10 mm×3 mm to produce a test piece. The test piece was set in Autograph (manufactured by Shimadzu), and subjected to a bending test in accordance with JIS K 7171. With the strength of the resin cured product of Comparative Example 3 serving as a reference, a case in which the relative strength was increased by 20% or more was marked with Symbol "○", a case in which the relative strength was comparable was marked with Symbol "Δ", and a case in which the relative strength was decreased by 20% or more was marked with Symbol "×". The results of the strength evaluation are shown in Tables 1 to 3.

**Table 1**

| | Example 1 | Example 2 | Example 3 | Example 4 | Example 5 | Example 6 |
|---|---|---|---|---|---|---|
| Nanocarbon | Fullerene 0.1 mass% | Fullerene 1 mass% | Fullerene 5 mass% | Fullerene 10 mass% | Fullerene 1 mass% | Fullerene 1 mass% |
| Organic additive | 4,4'-Azobis (4-cyanovaleric acid) 0.03 mass% | 4,4'-Azobis (4-cyanovaleric acid) 0.3 mass% | 4,4'-Azobis (4-cyanovaleric acid) 1.5 mass% | 4,4'-Azobis (4-cyanovaleric acid) 3 mass% | 4,4'-Azobis (4-cyanovaleric acid) 0.3 mass% | 4,4'-Azobis (4-cyanovaleric acid) 0.3 mass% |
| Polymerizable unsaturated monomer | Styrene | Styrene | Styrene | Styrene | Styrene | Styrene |
| Curing conditions | 80 °C×3 hours 120 °C×5 hours 180 °C×2 hours | 80 °C×3 hours 120 °C×5 hours 180 °C×2 hours | 80 °C×3 hours 120 °C×5 hours 180 °C×2 hours | 80 °C×3 hours 120 °C×5 hours 180 °C×2 hours | 60 °C×5 hours 120 °C×5 hours 180 °C×2 hours | 100 °C×3 hours 120 °C×5 hours 180 °C×2 hours |
| Heat resistance | ⊚ | ⊚ | ⊚ | ⊚ | ⊚ | ⊚ |
| Strength | ○ | ○ | ○ | ○ | ○ | ○ |

**Table 2**

| | Example 7 | Example 8 | Example 9 | Example 10 | Example 11 | Example 12 |
|---|---|---|---|---|---|---|
| Nanocarbon | Fullerene 1 mass% | Fullerene 1 mass% | Fullerene 1 mass% | Carbon nanotube 1 mass% | Fullerene 1 mass% | Fullerene derivative 1 mass% |
| Organic additive | 2,2'-Azobis [2-methyl-N-(2-h ydroxyethyl) propionamide] 0.3 mass% | 2,2'-Azobis (2-methylpropion amidine) dihydrochloride 0.3 mass% | 4,4'-Azobis (4-cyanovaleric acid) 0.3 mass% | 4,4'-Azobis (4-cyanovaleric acid) 0.3 mass% | 4,4'-Azobis (4-cyanovaleric acid) 0.3 mass% | 4,4'-Azobis (4-cyanovaleric acid) 0.3 mass% |
| Polymerizable unsaturated monomer | Styrene | Styrene | 2-Hydroxyethyl (meth) acrylate | Styrene | Styrene | Styrene |
| Curing conditions | 90 °C×3 hours 120 °C×5 hours 180 °C×2 hours | 80 °C×3 hours 120 °C×5 hours 180 °C×2 hours | 80 °C×3 hours 120 °C×5 hours 180 °C×2 hours | 80 °C×3 hours 120 °C×5 hours 180 °C×2 hours | 50 °C×5 hours 120 °C×5 hours 180 °C×2 hours | 50 °C×3 hours 120 °C×5 hours 180 °C×2 hours |
| Heat resistance | ⊚ | ⊚ | ⊚ | ⊚ | ○ | ○ |
| Strength | ○ | ○ | ○ | ○ | ○ | ○ |

**Table 3**

| | Comparative Example 1 | Comparative Example 2 | Comparative Example 3 | Comparative Example 4 |
|---|---|---|---|---|
| Nanocarbon | Fullerene 0.01 mass% | Fullerene 12 mass% | None | Fullerene 1 mass% |
| Organic additive | 4,4'-Azobis (4-cyanovaleric acid) 0.003 mass% | 4,4'-Azobis (4-cyanovaleric acid) 3.6 mass% | None | None |
| Polymerizable unsaturated monomer | Styrene | Styrene | Styrene | Styrene |
| Curing conditions | 80 °C×3 hours 120 °C×5 hours 180 °C×2 hours | 80 °C×3 hours 120 °C×5 hours 180 °C×2 hours | 80 °C×3 hours 120 °C×5 hours 180 °C×2 hours | 80 °C×3 hours 120 °C×5 hours 180 °C×2 hours |
| Heat resistance | Δ | Δ | Δ | ○ |
| Strength | Δ | × | Δ | × |

As apparent from Tables 1 to 3 and FIG. 6, in each of Examples 1 to 12, in which the nanocarbon was added in the range of 0.1 mass% or more and 10 mass% or less with respect to the liquid thermosetting resin composition, a resin cured product having high heat resistance was obtained. On the other hand, in each of Comparative Example 1, in which the addition amount of the nanocarbon was less than 0.1 mass%, and Comparative Example 2, in which the addition amount of the nanocarbon was more than 10 mass%, no heat resistance-improving effect was found.

As apparent from Tables 1 to 3, in each of Examples 1 to 12, in which the nanocarbon was added in the range of 0.1 mass% or more and 10 mass% or less with respect to the liquid thermosetting resin composition, a resin cured product having high strength was obtained.

From the above-mentioned results, it was found that the heat resistance of the resin cured product was improved by incorporating the nanocarbon into the liquid thermosetting resin composition at a specific ratio. It was also found that the strength of the resin cured product was also improved by adding the organic additive having functional groups reactive with the thermosetting resin and the nanocarbon at molecular ends thereof.

The present international application claims priority based on Japanese Patent Application No. 2017-098181 filed on May 17, 2017.

### EXPLANATION ON NUMERALS

- 1: thermosetting resin
- 2: nanocarbon
- 3: reaction site for nanocarbon
- 4: reaction site for thermosetting resin
- 5: organic additive
- 6: polymer of polymerizable unsaturated monomer
- 7: insulating coating
- 8: element wire
- 9: insulating layer
- 10: coil conductor
- 11: stator core
- 12: slot
- 13: spacer
- 14: wedge
- 15: core fastening member
- 16: holding ring
- 17: frame
- 18: inner frame member
- 19: elastic supporting member

## Claims

1. A liquid thermosetting resin composition, comprising:
- a thermosetting resin (1);
- a nanocarbon (2);
- an organic additive (5) that has functional groups reactive with the thermosetting resin (1) and the nanocarbon (2) at molecular ends thereof, has an -N=N- structure in a molecule thereof and undergoes thermal degradation at 50 °C or more and 100 °C or less to generate a nitrogen gas and carbon radicals, to thereby cause a radical reaction with the nanocarbon (2);
- a polymerizable unsaturated monomer; and
- a polymerization initiator for the polymerizable unsaturated monomer, wherein content of the nanocarbon (2) is 0.1 mass% or more and 10 mass% or less with respect to the liquid thermosetting resin composition.

2. The liquid thermosetting resin composition according to claim 1,
wherein the nanocarbon (2) is at least one selected from the group consisting of a fullerene and carbon nanotubes.

3. The liquid thermosetting resin composition according to claim 1,
wherein the nanocarbon (2) is phenyl-fullerene-butyric acid methyl ester.

4. The liquid thermosetting resin composition according to any one of claims 1 to 4, wherein the functional groups at the molecular ends of the organic additive (5) each are at least one selected from the group consisting of a carboxylic acid group, a hydroxy group, and an amino group.

5. The liquid thermosetting resin composition according to any one of claims 1 to 5, wherein the polymerizable unsaturated monomer is at least one selected from the group consisting of styrene and 2-hydroxyethyl (meth)acrylate.

6. The liquid thermosetting resin composition according to any one of claims 1 to 6, wherein the polymerization initiator for the polymerizable unsaturated monomer has a 10-hour half-life temperature of 100 °C or more.

7. A method of producing a resin cured product,
comprising the steps of:
- heating the liquid thermosetting resin composition according to any one of claims 1 to 7, to thereby allow the nanocarbon (2) and the organic additive (5) to react with each other to form a nanocarbon derivative; and
- further heating the resin composition containing the nanocarbon derivative, to thereby allow the thermosetting resin (1) and the nanocarbon derivative to react with each other and allow the nanocarbon derivative and the polymerizable unsaturated monomer to react with each other.

8. A stator coil, comprising:
- a coil conductor (10); and
- an insulating layer (9) arranged on a periphery of the coil conductor (10), wherein the insulating layer (9) contains a cured product of the liquid thermosetting resin composition according to any one of claims 1 to 7.

9. A rotating electrical machine, comprising:
- a stator core (11); and
- a stator coil according to claim 9 accommodated in a slot (12) of the stator core (11).

## Patentansprüche

1. Flüssige wärmehärtende Harzzusammensetzung, die Folgendes aufweist:
- ein wärmehärtendes Harz (1);
- einen Nanokohlenstoff (2);
- ein organisches Additiv (5), das funktionelle Gruppen aufweist, die mit dem wärmehärtenden Harz (1) und dem Nanokohlenstoff (2) an molekularen Enden davon reaktiv sind, eine -N=N- Struktur in einem Molekül davon aufweist und bei 50 °C oder mehr und 100 °C oder weniger einen thermischen Abbau erfährt, um ein Stickstoffgas und Kohlenstoffradikale zu erzeugen, um dadurch eine radikalische Reaktion mit dem Nanokohlenstoff (2) zu bewirken;
- ein polymerisierbares ungesättigtes Monomer; und
- einen Polymerisationsinitiator für das polymerisierbare ungesättigte Monomer, wobei der Gehalt des Nanokohlenstoffs (2) 0,1 Massen-% oder mehr und 10 Massen-% oder weniger in Bezug auf die flüssige wärmehärtende Harzzusammensetzung beträgt.

2. Flüssige wärmehärtende Harzzusammensetzung nach Anspruch 1,
wobei der Nanokohlenstoff (2) mindestens einer ist, der ausgewählt ist aus der Gruppe, die aus aus einem Fulleren und Kohlenstoffnanoröhren besteht.

3. Flüssige wärmehärtende Harzzusammensetzung nach Anspruch 1,
wobei der Nanokohlenstoff (2) Phenyl-Fulleren-Buttersäuremethylester ist.

4. Flüssige wärmehärtende Harzzusammensetzung
nach einem der Ansprüche 1 bis 4,
wobei die funktionellen Gruppen an den molekularen Enden des organischen Additivs (5) jeweils mindestens eine sind, ausgewählt aus der Gruppe, die aus einer Carbonsäuregruppe, einer Hydroxygruppe und einer Aminogruppe besteht.

5. Flüssige wärmehärtende Harzzusammensetzung
nach einem der Ansprüche 1 bis 5,
wobei das polymerisierbare ungesättigte Monomer mindestens eines ist, das ausgewählt ist aus der Gruppe, die aus Styrol und 2-Hydroxyethyl(meth)acrylat besteht.

6. Flüssige wärmehärtende Harzzusammensetzung
nach einem der Ansprüche 1 bis 6,
wobei der Polymerisationsinitiator für das polymerisierbare ungesättigte Monomer eine 10-Stunden-Halbwertszeit-Temperatur von 100 °C oder mehr aufweist.

7. Verfahren zur Herstellung eines gehärteten Harzprodukts,
das folgende Schritte umfasst:
- Erhitzen der flüssigen wärmehärtenden Harzzusammensetzung nach einem der Ansprüche 1 bis 7, damit dadurch der Nanokohlenstoff (2) und das organische Additiv (5) miteinander reagieren können, um ein Nanokohlenstoffderivat zu bilden; und
- weiteres Erhitzen der das Nanokohlenstoffderivat enthaltenden Harzzusammensetzung, damit dadurch das wärmehärtende Harz (1) und das Nanokohlenstoffderivat miteinander reagieren können und das Nanokohlenstoffderivat und das polymerisierbare ungesättigte Monomer miteinander reagieren können.

8. Statorspule, die Folgendes aufweist:
- einen Spulenleiter (10); und
- eine Isolierschicht (9), die an einem Umfang des Spulenleiters (10) angeordnet ist,
wobei die Isolierschicht (9) ein gehärtetes Produkt der flüssigen wärmehärtenden Harzzusammensetzung nach einem der Ansprüche 1 bis 7 enthält.

9. Elektrische Drehmaschine, die Folgendes aufweist:
- einen Statorkern (11); und
- eine Statorspule nach Anspruch 9, die in einer Aussparung (12) des Statorkerns (11) untergebracht ist.

## Revendications

1. Composition de résine thermodurcissable liquide, comprenant :
- une résine thermodurcissable (1) ;
- un nanocarbone (2) ;
- un additif organique (5) qui présente des groupes fonctionnels réactifs avec la résine thermodurcissable (1) et le nanocarbone (2) à ses extrémités moléculaires, présente une structure -N=N- dans une de ses molécules et subit une dégradation thermique à 50 °C ou plus et 100 °C ou moins pour générer de l'azote gazeux et des radicaux carbone, pour provoquer ainsi une réaction des radicaux avec le nanocarbone (2) ;
- un monomère insaturé polymérisable ; et
- un initiateur de polymérisation pour le monomère insaturé polymérisable, dans laquelle la teneur du nanocarbone (2) est de 0,1 % en masse ou plus et de 10 % en masse ou moins par rapport à la composition de résine thermodurcissable liquide.

2. Composition de résine thermodurcissable liquide selon la revendication 1, dans laquelle le nanocarbone (2) est au moins un élément choisi dans le groupe constitué par un fullerène et des nanotubes de carbone.

3. Composition de résine thermodurcissable liquide selon la revendication 1, dans laquelle le nanocarbone (2) est un ester méthylique d'acide phényl -full erène-butyrique.

4. Composition de résine thermodurcissable liquide selon l'une quelconque des revendications 1 à 4,
dans laquelle les groupes fonctionnels aux extrémités moléculaires de l'additif organique (5) sont chacun au moins un élément choisi dans le groupe constitué par un groupe acide carboxylique, un groupe hydroxy et un groupe amino.

5. Composition de résine thermodurcissable liquide selon l'une quelconque des revendications 1 à 5,
dans laquelle le monomère insaturé polymérisable est au moins un élément choisi dans le groupe constitué par le styrène et le (méth)acrylate de 2-hydroxyéthyle.

6. Composition de résine thermodurcissable liquide selon l'une quelconque des revendications 1 à 6,
dans laquelle l'initiateur de polymérisation pour le monomère insaturé polymérisable a une température de demi-vie à 10 heures de 100 °C ou plus.

7. Procédé de production d'un produit durci à base de résine,
comprenant les étapes consistant à :
- chauffer la composition de résine thermodurcissable liquide selon l'une quelconque des revendications 1 à 7, pour permettre ainsi au nanocarbone (2) et à l'additif organique (5) de réagir l'un avec l'autre pour former un dérivé de nanocarbone ; et
- chauffer davantage la composition de résine contenant le dérivé de nanocarbone, pour permettre ainsi à la résine thermodurcissable (1) et au dérivé de nanocarbone de réagir l'un avec l'autre et permettre au dérivé de nanocarbone et au monomère insaturé polymérisable de réagir l'un avec l'autre.

8. Bobine de stator, comprenant :
- un conducteur de bobine (10) ; et
- une couche isolante (9) disposée sur une périphérie du conducteur de bobine (10), dans laquelle la couche isolante (9) contient un produit durci de la composition de résine thermodurcissable liquide selon l'une quelconque des revendications 1 à 7.

9. Machine électrique tournante, comprenant :
- un noyau de stator (11), et
- une bobine de stator selon la revendication 9 logée dans une encoche (12) du noyau de stator (11).
